# EUROPÄISCHE PATENTSCHRIFT

(11) **EP 1 747 375 B1**
(45) Veröffentlichungstag und Bekanntmachung des Hinweises auf die Patenterteilung: **27.05.2009**
(21) Anmeldenummer: 05736119.8
(22) Anmeldetag: 04.05.2005
(51) Int. Cl.: F03D 7/02, F03D 9/00

(54) **VERFAHREN ZUR STEUERUNG UND REGELUNG EINER WINDENERGIEANLAGE**
METHOD FOR CONTROLLING AND ADJUSTING A WIND TURBINE
PROCEDE POUR COMMANDER ET REGULER UNE EOLIENNE

(30) Priorität: 18.05.2004 DE 102004024564
(43) Veröffentlichungstag der Anmeldung: 31.01.2007
(73) Patentinhaber: NORDEX Energy GmbH, 22848 Norderstedt (DE)
(72) Erfinder: VOSS, Eberhard, 18233 Jörnstorf (DE)
(74) Vertreter: Hauck Patent- und Rechtsanwälte
(86) Internationale Anmeldenummer: PCT/EP2005/004842
(87) Internationale Veröffentlichungsnummer: WO 2005/116445

(56) Entgegenhaltungen:
- EP-A- 1 128 064
- EP-A- 1 429 025
- WO-A-02/44561
- WO-A-90/07823
- DE-A1- 10 058 076
- DE-A1- 19 644 705
- DE-C1- 19 717 059
- DE-U1-1202004 009 07

## Beschreibung

Die vorliegende Erfindung betrifft ein Verfahren zur Steuerung und Regelung einer Windenergieanlage.

Aus DE 195 32 409 A1 ist ein Verfahren zum Betrieb einer Windenergieanlage bekannt, mit dem der Ertrag der Windenergieanlage erhöht und zugleich die Belastung bei höheren Windgeschwindigkeiten begrenzt werden kann. Hierzu wird die Leistung der Windenergieanlage ab einer vorbestimmten Abschaltwindgeschwindigkeit vermindert, indem die Betriebsdrehzahl des Rotors der Windenergieanlage begrenzt wird. Bei der bekannten Windenergieanlage wird bei Erreichen der Grenzgeschwindigkeit diese nicht vollständig abgeschaltet, sondern die Windenergieanlage wird zwangsweise in ihrer Betriebsdrehzahl reduziert, sobald eine Anströmgeschwindigkeit über dem Wert der Grenzgeschwindigkeit liegt. Die Windenergieanlage wird hierdurch oberhalb der üblichen "Abschaltgeschwindigkeit" weiter betrieben, sodass die Leistungskennlinie sich zu größeren Windgeschwindigkeiten hin verlängert und der Energieertrag sowie die Netzverträglichkeit der Windenergieanlage verbessert wird.

Aus EP 1 286 049 A2 ist eine Windkraftanlage mit pitch-geregelten Rotorblättern bekannt. Für die Windenergieanlage ist eine stationäre Parkposition vorgesehen, in der die Belastung für die Windenergieanlage reduziert ist. Die Windenergieanlage wird in der Parkposition durch eine aktive Regelung der Rotorblattverstellung stabilisiert. Erfolgt beispielsweise ein turbulenzbedingtes Auswandern des Rotorblatts aus der Parkposition, so folgt ein Regeleingriff, der diesem Auswandern entgegenwirkt. Hierzu wird der Verdrehbereich der Rotorblätter erweitert, so daß diese, bezogen auf eine übliche Drehrichtung des Rotors, ein entgegengesetztes Drehmoment erzeugen können.

Aus DE 100 58 076 C2 ist ein Verfahren zur Steuerung einer Windenergieanlage bekannt, bei welchem oberhalb einer Abschaltgeschwindigkeit das Maschinenhaus in eine vorgegebene Azimut-Position gebracht wird, wobei gleichzeitig die Rotorblätter für die Azimut-Position in ihre Fahnenstellung gebracht werden. Insbesondere wird bei dem Steuerverfahren auf den Einsatz einer Azimut-Bremse und einer Rotorbremse verzichtet, so daß der anströmende Wind den lee-seitigen Rotor selbsttätig in die Position mit dem geringsten Windwiderstand stellt. Bei dem bekannten Verfahren wird vermieden, daß durch die Einstellung einer Azimut-Position die in ihre Fahnenstellung gebrachten Rotorblätter, bezogen auf die Hauptwindrichtung, nachgeführt werden.

DE 197 17 059 C1 beschreibt eine Windenergieanlage mit zwei Parkstellungen für das Maschinenhaus. In einer ersten Parkstellung zeigt das Maschinenhaus in Luv-Richtung, die Rotorblätter werden über die Hinterkante angeströmt. In der zweiten Parkstellung ist das Maschinenhaus in eine Lee-Position zum Turm der Windenergieanlage geschwenkt, in der die Rotorblätter über die Vorderkante angeströmt werden. In der zweiten Position ist das Maschinenhaus mechanisch freigegeben und wird bei Änderungen der Windrichtung nachgeführt.

Der Erfindung liegt die Aufgabe zugrunde, ein Verfahren zur Steuerung einer Windenergieanlage bereitzustellen, das bei hohen Windgeschwindigkeiten die Belastung der Windenergieanlage reduziert und bei einem etwaigen Ausfall des Stromnetzes eine weitgehende Versorgung der Windenergieanlage sicherstellt.

Die erfindungsgemäße Aufgabe wird durch ein Verfahren mit den Merkmalen aus Anspruch 1 gelöst. Vorteilhafte Ausgestaltungen sind in den Unteransprüchen dargestellt.

Das erfindungsgemäße Verfahren bezieht sich auf die Steuerung und Regelung einer Windenergieanlage, die ein Maschinenhaus, mindestens ein Rotorblatt und eine Stromversorgung aufweist. Das Maschinenhaus ist in seinem Azimut-Winkel verstellbar. Das eine Rotorblatt oder die mehreren Rotorblätter sind jeweils um ihre Längsachse verstellbar, diese Verstellung wird als Pitch-Verstellung bezeichnet. Bei dem erfindungsgemäßen Verfahren für einen Trudelbetrieb bestimmt eine Steuereinheit aus gemessenen Werten für die Windgeschwindigkeit und die Windrichtung eine Winkelposition für das Maschinenhaus und einen oder mehrere Verstellwinkel für das mindestens eine Rotorblatt, wenn eine gemessene Windgeschwindigkeit einen bestimmten Geschwindigkeitswert überschreitet. In diesem durch das Überschreiten eines vorbestimmten Geschwindigkeitswerts vorgegebenen Betriebsmodus der Windenergieanlage werden durch die Steuereinheit Sollwinkel für Azimut- und Pitch-Einstellung berechnet. Die vorbestimmte Winkeleinstellung wird durch einen Azimut-Antrieb und einen Pitch-Antrieb eingestellt, wobei beide Antriebe von der Stromversorgung gespeist werden. Die Steuereinheit bestimmt die einzustellenden Winkel derart, daß das mindestens eine Rotorblatt sich mit einer Drehzahl aus einem vorbestimmten Drehzahlbereich dreht. Die Erfindung beruht auf dem Ansatz, daß auch in dem erfindungsgemäßen Betriebsmodus weiterhin eine Drehung erfolgen soll, so daß bei starkem Wind die Anlage gering belastet wird und/oder weiterhin über einen Hilfsgenerator Energie erzeugt werden kann. Das erfindungsgemäße Verfahren besitzt zwei wesentliche Anwendungsfälle. In dem einen Fall, bei dem die Stromversorgung beispielsweise durch das elektrische Netz oder auf sonstige Weise sichergestellt ist, wird der vorbestimmte Geschwindigkeitswert hoch gewählt, beispielsweise im Bereich der Abschaltgeschwindigkeit, so daß bei hohen Windgeschwindigkeiten die Windenergieanlage in den Trudelbetrieb gelangt. Hierbei wird der Rotor nicht angehalten, sondern kann sich mit einer geringen Drehzahl weiter drehen. In einer zweiten Anwendung des erfindungsgemäßen Verfahrens ist das elektrische Netz oder der Anschluß an dieses ausgefallen, so daß vom Generator erzeugte elektrische Energie nicht länger eingespeist werden kann und Verbraucher in der Windenergieanlage nicht dauerhaft versorgt werden können. In diesem Fall wird eine sehr niedrige vorbestimmte Geschwindigkeit gewählt, so daß das erfindungsgemäße Verfahren auch bei regulären Windbedingungen zum Einsatz kommt. Hier dreht sich dann die Windenergieanlage mit einer Drehzahl aus einem vorbestimmten Drehzahlbereich und erzeugt so die zur Versorgung notwendige Energie in dem Trudelbetrieb.

In einer bevorzugten Ausgestaltung bestimmt die Steuereinheit für das mindestens eine Rotorblatt den oder die Sollwerte für Verstellwinkel abhängig von dem berechneten Azimut-Winkel und weiteren Größen, wie beispielsweise Istwert der Drehzahl, Windrichtung und Windgeschwindigkeit. Bei gemessener Windrichtung oder bei bestimmter Hauptwindrichtung für sich ändernde Windrichtungen wird der Pitch-Winkel wenigstens unter Berücksichtigung des Sollwerts des vorgegebenen Azimut-Winkels und/oder einem Istwert der Drehzahl bestimmt.

In einer oben bereits angesprochenen Variante des erfindungsgemäßen Verfahrens erfolgt die Stromversorgung über das Stromnetz, mit dem die Windenergieanlage verbunden ist. In diesem Fall liegt eine ausreichende Stromversorgung für die Verbraucher der Windenergieanlage, wie beispielsweise Steuereinheit, Antriebe, Meßsensoren, Kommunikationseinrichtungen und dergleichen, im ausreichenden Maße vor, so daß eine Not- oder Hilfsversorgung nicht erforderlich ist. Der Übergang in den Trudelbetrieb erfolgt dann, wenn ein entsprechend großer Wert für die vorbestimmte Windgeschwindigkeit überschritten wird, wobei der vorbestimmte Geschwindigkeitswert (v₁*) der Abschaltgeschwindigkeit der Windenergieanlage ungefähr entspricht.

In der zweiten Ausgestaltung ist ein Hilfsgenerator vorgesehen, der zur Stromversorgung in dem vorbestimmten Drehzahlbereich des Trudelbetriebs ausgelegt und dessen Eingangswelle mit einer von dem Rotor angetriebenen Welle gekoppelt ist. Bei dieser Ausgestaltung des erfindungsgemäßen Verfahrens gewinnt der Hilfsgenerator die für die Versorgung notwendige elektrische Leistung aus der Drehung des Rotors im Trudelbetrieb. Vorzugsweise besitzt hierbei der vorbestimmte Drehzahlbereich niedrige Drehzahlen im Vergleich zum regulären Betrieb der Windenergieanlage. Alternativ kann der vorbestimmte Drehzahlbereich auch Drehzahlen aufweisen, wie sie beim regulären Betrieb der Windenergieanlage vorliegen. In diesem Fall dient vorzugsweise ein für den regulären Betrieb bestimmter Generator als Hilfsgenerator.

Bevorzugt ist der Hilfsgenerator so ausgelegt, daß mindestens ein Teil der elektrischen Verbraucher in der Windenergieanlage dauerhaft durch diesen versorgt werden kann.

Bei einem Ausfall des mit der Windenergieanlage verbundenen Netzes wird bevorzugt der vorbestimmte Wert für die Windgeschwindigkeit auf einen niedrigen Wert gesetzt derart, daß der Hilfsgenerator einen Teil der Verbraucher der Windenergieanlage versorgen kann. Hierbei entspricht der vorbestimmte Wert ungefähr der Einschaltgeschwindigkeit der Windenergieanlage. Bevorzugt bestimmt die Steuereinheit für das mindestens eine Rotorblatt den oder die Sollwerte für die Verstellwinkel abhängig von einem Leistungsbedarf der zu versorgenden Verbraucher in der Windenergieanlage.

Drei mögliche Ausgestaltungen des erfindungsgemäßen Verfahrens werden nachfolgend mit Hilfe von drei Flußdiagrammen erläutert. Es zeigt:

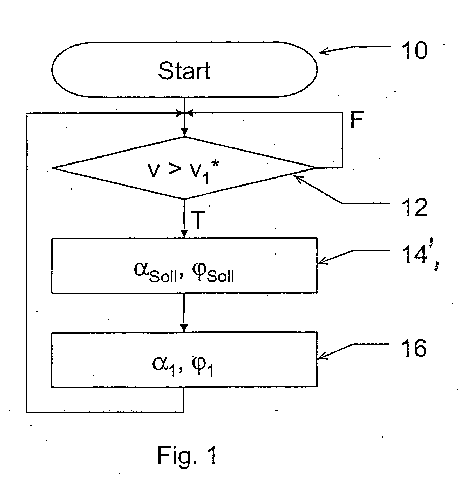

- Fig. 1: ein Flußdiagramm für das erfindungsgemäße Verfahren, das bei Überschreiten eines vorbestimmten Wertes v₁* für die Windgeschwindigkeit in einen kontrollierten Trudelbetrieb umschaltet,
- Fig.: 2den Ablauf des erfindungsgemäßen Verfahrens, das bei Netzausfall in den kontrollierten Trudelbetrieb umschaltet, und
- Fig.: 3ein Steuerverfahren, das sowohl bei Überschreiten einer ersten Windgeschwindigkeit v₁* als auch bei Netzausfall in einen kontrollierten Trudelbetrieb umschaltet, um die Verbraucher der Windenergieanlage zu versorgen.

Zunächst mit Bezug auf Fig. 1: Das erfindungsgemäße Verfahren wird in einem Verfahrensschritt 10 initialisiert. In einer nachfolgenden Abfrage 12 prüft die Steuereinheit, ob die Werte für die gemessene Windgeschwindigkeit v größer als ein vorbestimmter Wert V₁* für die Windgeschwindigkeit sind. Bei dem gemessenen Wert der Windgeschwindigkeit kann es sich um einen momentanen Wert oder um einen über ein Zeitintervall gemittelten Wert handeln, so daß kurzfristige Schwankungen in der Windgeschwindigkeit ausgeglichen werden. Der vorbestimmte Wert für die Windgeschwindigkeit V* legt dabei vorzugsweise ungefähr in der Größe der üblichen Abschaltgeschwindigkeit für die Windenergieanlage, bei der aufgrund der großen Windstärke kein regulärer Betrieb mehr erfolgen kann.

Überschreitet die gemessene Windgeschwindigkeit v den vorbestimmten Grenzwert für die Windgeschwindigkeit v₁*, berechnet die Steuereinheit in einem nachfolgenden Schritt 14 einen Sollwert für den Azimut-Winkel α Soll und den Pitch-Winkel (ϕ_Soll der Rotorblätter. Bevorzugt werden für eine gleichmäßige Belastung der Rotorblätter alle Rotorblätter in die gleiche Pitch-Stellung verfahren. Die Sollwerte α_Soll und ϕ_Soll werden hierbei so berechnet, daß die Windenergieanlage von ihrer aktuellen Drehzahl auf einen niedrigeren Drehzahlwert bremst, nachdem in Schritt 16 die von der Steuereinheit bestimmten Sollwerte eingestellt wurden. Die Windenergieanlage dreht sich dann mit einer niedrigen, jedoch vorbestimmten Drehzahl. Nicht dargestellt in Fig. 1 ist eine Regelung, die zur Stabilisierung der vorgegebenen Drehzahl vorgesehen werden kann. Weicht die durch die Winkel α und ϕ erzielte Drehzahl nach oben oder nach unten aus dem vorbestimmten Drehzahlintervall ab, so erfolgt ein Regeleingriff dahingehend, daß die Drehzahl wieder in den gewünschten Drehzahlbereich zurückkehrt. Das Maschinengehäuse bleibt bei diesem Verfahren dem Wind zugekehrt.

Der besondere Vorteil des in Fig. 1 dargestellten Verfahrens besteht darin, daß durch den Trudelbetrieb mit einer niedrigen Drehzahl die Windenergieanlage auch bei Sturm stabil ist. Die langsame Drehung des Rotors verhindert, daß sich Spannungen und Kräfte durch den einfallenden Wind oder Sturm aufbauen, die die Windenergieanlage beschädigen können. Auch sind plötzlich auftretende Böen durch die Drehung der Rotorblätter nicht länger kritisch. Der Trudelbetrieb erhöht die Stabilität der Windenergieanlage, so dass diese entsprechend ausgelegt werden kann.

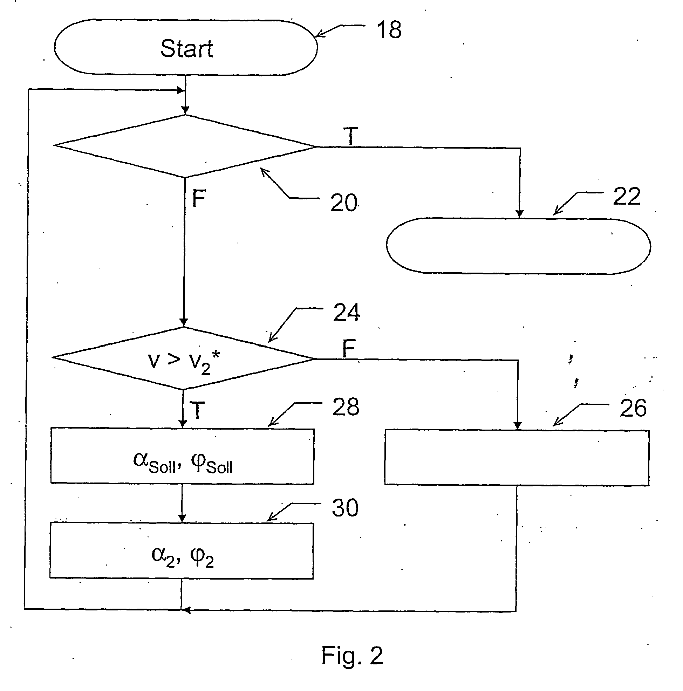

Fig. 2 zeigt eine weitere Anwendung des kontrollierten Trudelbetriebs, bei dem nach einer Initialisierung 18 in einer Abfrage 20 überprüft wird, ob das elektrische Netz, mit dem die Windenergieanlage zur Einspeisung von elektrischer Energie verbunden ist, zur Verfügung steht. Ist das elektrische Netz vorhanden, so kann in Verfahrensschritt 22 mit einer weiteren Steuerung oder Regelung fortgefahren werden, beispielsweise auch mit dem in Fig. 1 dargestellten Verfahren, wie nachfolgend noch näher beschrieben wird. Ist das elektrische Netz ausgefallen, wird in Schritt 24 geprüft, ob eine gemessene Windgeschwindigkeit v größer als eine vorbestimmte Mindestwindgeschwindigkeit v₂* ist. Die Mindestgeschwindigkeit v₂* ist hierbei so bemessen, daß eine Stromversorgung der elektrischen Verbraucher in der Windenergieanlage durch einen Hilfsgenerator aus dem Wind erfolgen kann. Überschreitet die gemessene Windgeschwindigkeit nicht den vorbestimmten Minimalwert für die Windgeschwindigkeit, werden in Schritt 26 die zur Sicherung der Windenergieanlage notwendigen Schritte bei einem Ausfall der Netzversorgung eingeleitet. Hierzu können zählen, Stellen der Rotorblätter in die Fahnenposition, Sichern und Herunterfahren der Steuereinheit, Starten von Notstromaggregaten und dergleichen.

Reicht jedoch bei einem Netzausfall die aus dem Wind zu gewinnende Leistung aus, um über einen mit dem Rotor verbundenen Hilfsgenerator ausreichend elektrische Energie für die Windenergieanlage zu erzeugen, so bestimmt die Steuereinheit in Schritt 28 Sollwerte für den Azimut- und den Pitch-Winkel derart, daß die Windenergieanlage mit einer für den Hilfsgenerator geeigneten Drehzahl läuft, nachdem in Schritt 30 die vorbestimmten Winkel α und ϕ eingestellt wurden. Die Verwendung eines durch den Rotor angetriebenen elektrischen Hilfsgenerators bei Netzausfall ermöglicht es, daß die Windenergieanlage unabhängig von einer externen Versorgung oder von zugeschalteten Hilfsaggregaten für die Versorgung der elektrischen Verbraucher ausreichend Energie zur Verfügung stellt und damit dauerhaft funktionstüchtig bleibt.

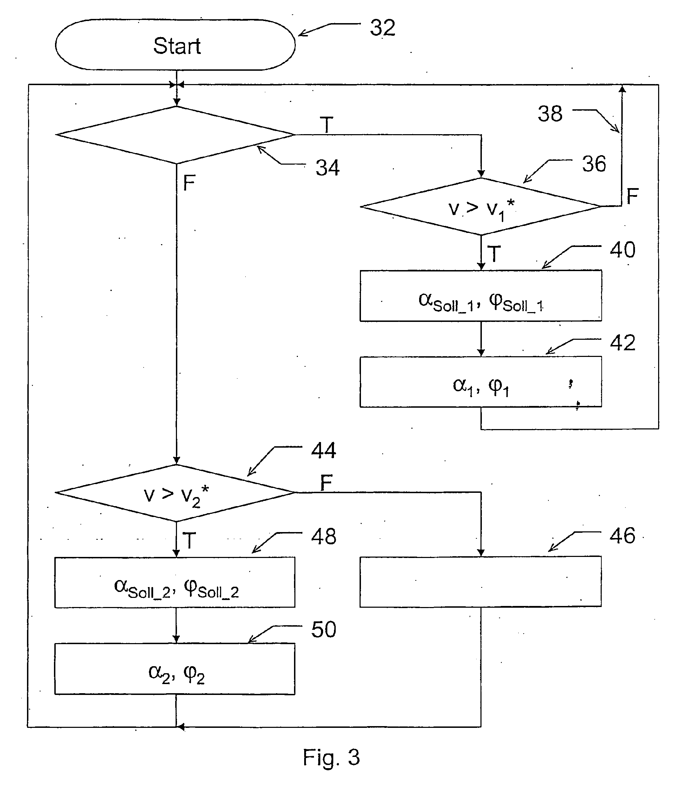

Fig. 3 zeigt eine besonders bevorzugte Kombination beider Verfahren. Bei dem in Fig. 3 dargestellten Verfahren wird nach einer Initialisierung des Verfahrens in Schritt 32 zunächst in Schritt 34 abgefragt, ob eine Stromversorgung aus dem elektrischen Netz bzw. dem regulär von dem Generator erzeugten Strom erfolgen kann.

Ergibt die Abfrage 34, daß eine ausreichende Stromversorgung vorhanden ist, so wird in dem nachfolgenden Schritt 36 geprüft, ob die gemessene Windgeschwindigkeit einen vorbestimmten Wert v₁* überschreitet. Ist dies nicht der Fall, so kehrt dieser Teil des Verfahrens über den Ast 38 in seine Ausgangsposition zurück und es kann eine reguläre Steuerung bzw. Regelung der Windenergieanlage zur Erzielung einer maximalen Leistung erfolgen (nicht dargestellt).

Überschreitet dagegen die gemessene Windgeschwindigkeit v den vorbestimmten Wert v₁*, werden in Schritt 40 erste Sollwerte für den Azimut- und den Pitch-Winkel (α_Soll_1 und ϕ_Soll_1 ) berechnet. Diese Winkel werden von der Steuereinheit so bestimmt, daß die Windenergieanlage nach Einstellung der Winkel in Verfahrensschritt 42 auf einen vorbestimmten Drehzahlbereich abgebremst wird. Mit den Winkeln α_1 und ϕ_1 wird ein stabiler Trudelbetrieb erzielt, bei dem bei starkem Wind (v>V]*) die Windenergieanlage trudelt.

Wird dagegen in Abfrage 34 festgestellt, daß das elektrische Netz ausgefallen ist, wird in Schritt 44 abgefragt, ob die Windgeschwindigkeit groß genug ist, um über einen Hilfsgenerator ausreichend elektrische Leistung zu versorgen. Ist dies nicht der Fall, werden ähnlich wie bei dem Verfahren aus Fig. 2 in Schritt 46 die entsprechenden Notmaßnahmen zur Sicherung der Windenergieanlage eingeleitet.

Ergibt die Abfrage 44 jedoch, daß der Wind stark genug ist (v > v₂*), um ausreichend elektrische Leistung zur Versorgung der Windenergieanlage mit dem Hilfsgenerator zu gewinnen, so wird in Schritt 48 die entsprechenden Sollwerte für Azimut- und Pitch-Winkel (α_Soll-2, ϕ_Soll-2) berechnet. Nach Einstellen dieser Winkel in Verfahrensschritt 50 erzeugt der Hilfsgenerator die für den Betrieb der Windenergieanlage ausreichende elektrische Leistung, ohne diese in das Netz einzuspeisen.

Der Einfachheit halber wurde in den vorstehenden Beispielen der kontrollierte Trudelbetrieb der Windenergieanlage lediglich für eine Ansteuerung der Azimut- und Pitch-Winkel beschrieben. Hierbei wurde angenommen, daß die Windenergieanlage nach einer gewissen Dauer in den vorbestimmten Drehzahlbereich wechselt. Es kann aber auch auf den vorbestimmten Drehzahlbereich geregelt werden, indem beispielsweise der Istwert der Drehzahl gemessen und bei der Bestimmung der Sollwerte für die Winkel mit berücksichtigt wird.

## Patentansprüche

1. Verfahren zur Steuerung und Regelung einer Windenergieanlage mit einem um einen Azimut-Winkel verstellbaren Maschinenhaus, einem Rotor mit mindestens einem um seine Längsachse verstellbaren Rotorblatt, einer Stromversorgung und einer Steuereinheit, die einen Betriebsmodus für einen Trudelbetrieb besitzt, wobei das Verfahren durch folgende Schritte gekennzeichnet ist :
- die Steuereinheit schaltet in zwei Anwendungsfällen in den Betriebsmodus des Trudelbetriebs nämlich wenn
(i) die Windgeschwindigkeit eine Abschaltgeschwindigkeit überschreitet und die Stromversorgung über ein mit der Windemergieanlage verbundenes Stromnetz erfolgt oder wenn
(ii) die Windgeschwindigkeit eine Einschaltgeschwindigkeit überschreitet und das mit der Windenergieanlage verbundene Stromnetz oder der Anschluß um dieses ausgefallen ist,
- die Steuereinheit bestimmt aus gemessenen Werten (v) für die Windgeschwindigkeit und die Windrichtung eine Azimut-Winkelposition (α) für das Maschinenhaus und einen oder mehrere Verstellwinkel (ϕ) für das mindestens eine Rotorblatt derart, daß der Rotor in der eingestellten Position sich mit einer Drehzahl aus einem vorbestimmten Drehzahlbereich dreht,
- mindestens ein von der Stromversorgung gespeister Azimut-Antrieb stellt das Maschinenhaus in die von der Steuereinheit bestimmte Azimut-Winkelposition (α) und mindestens ein von der Stromversorgung gespeister Pitch-Antrieb stellt das mindestens eine Rotorblatt in die von der Steuereinheit bestimmte Winkelposition (ϕ), wobei ein mit dem Rotor gekoppelter Hilfsgenerator mindestens einen Teil der elektrischen Verbraucher in der Windenergieanlage mit Strom versorgt, wenn das mit der Windenergieanlage verbundene Stromnetz ausgefallen ist.

2. Verfahren nach Anspruch 1, **dadurch gekennzeichnet, daß** die Steuereinheit für das mindestens eine Rotorblatt den oder die Sollwerte für die Verstellwinkel abhängig von wenigstens dem berechneten Azimut-Winkel und/oder dem Istwert der Drehzahl bestimmt.

3. Verfahren nach Anspruch 1 oder 2, **dadurch gekennzeichnet, daß** der vorbestimmte Drehzahlbereich niedrige Drehzahlen im Vergleich zu einem regulären Betrieb der Windenergieanlage besitzt.

4. Verfahren nach einem der Ansprüche 1 oder 2, **dadurch gekennzeichnet, daß** der vorbestimmte Drehzahlbereich Drehzahlen aufweist, wie sie bei einem regulären Betrieb der Windenergieanlage auftreten.

5. Verfahren nach einem der Ansprüche 1 bis 4, **dadurch gekennzeichnet, daß** ein für den regulären Betrieb bestimmter Generator als der Hilfsgenerator vorgesehen ist.

6. Verfahren nach einem der Ansprüche 1 bis 5, **dadurch gekennzeichnet, daß** der Hilfsgenerator zur Versorgung mindestens eines Teils der elektrischen Verbraucher in der Windenergieanlage ausgelegt ist, wobei diese Verbraucher wenigstens Steuereinheit, Windsensor, Azimut- und Pitch-Antrieb umfassen.

7. Verfahren nach einem der Ansprüche 1 bis 6, **dadurch gekennzeichnet, daß** die Steuereinheit für das mindestens eine Rotorblatt den oder die Sollwerte für die Verstellwinkel abhängig von einem Leistungsbedarf der zu versorgenden elektrischen Verbraucher in der Windenergieanlage bestimmt.

8. Verfahren nach einem der Ansprüche 1 bis 7, **dadurch** gekenntzeichnet, daß im Betriebsmodus Trudelbetrieb eine dauerhafte Drehung des Rotors erfolgt.

## Claims

1. A method for controlling and adjusting a wind power installation having a nacelle displaceable by an azimuth angle, a rotor having at least one rotor blade displaceable about its longitudinal axis, a power supply and a control unit having an operating mode for a spinning mode, wherein the method is **characterized by** the following steps:
- in two applications, the control unit switches into the operating mode of spinning mode, namely upon
(i) wind velocity exceeding a cut-out speed and the power being supplied through a power supply system connected to the wind power installation or upon
(ii) the wind velocity exceeding a cut-in speed and the power supply system connected to the wind power installation or the connection to same fails,
- the control unit determines an azimuth angular position (α) for the nacelle from measured values (v) of wind velocity and wind direction and one or more displacement angles (ϕ) for the at least one rotor blade such that the rotor rotates in the set position at a rotational speed within a predetermined range of rotational speed,
- at least one azimuth drive fed by the power supply sets the nacelle into the angular position (α) determined by the control unit and at least one pitch drive fed by the power supply sets the at least one rotor blade into the angular position (ϕ) determined by the control unit, wherein an auxiliary generator coupled to the rotor supplies power to at least some of the electrical consumers in the wind power installation when the power supply system connected to the wind power installation fails.

2. The method according to claim 1, **characterized in that** the control unit determines the target value(s) for the displacement angle for the at least one rotor blade dependent on at least the calculated azimuth angle and/or the actual rotational speed value.

3. The method according to claim 1 or 2, **characterized in that** the predetermined range of rotational speed is of a lower rotational speed than that in a regular operation of the wind power installation.

4. The method according to any one of claims 1 to 2, **characterized in that** the predetermined range of rotational speed exhibits rotational speeds as occur during a regular operation of the wind power installation.

5. The method according to any one of claims 1 to 4, **characterized in that** a generator designed for regular operation is provided as the auxiliary generator.

6. The method according to any one of claims 1 to 5, **characterized in that** the auxiliary generator is configured to supply at least some of the electrical consumers in the wind power installation, wherein said consumers comprise at least the control unit, wind sensor, azimuth drive and pitch drive.

7. The method according to any one of claims 1 to 6, **characterized in that** the control unit determines the target value(s) for the displacement angle for the at least one rotor blade dependent on the power needs of the electrical consumers to be supplied in the wind power installation.

8. The method according to any one of claims 1 to 7, **characterized in that** a sustained rotation of the rotor ensues in the operating mode of spinning mode.

## Revendications

1. Procédé pour commander et réguler une éolienne avec une salle des machines ajustable selon un angle azimutal, un rotor avec au moins une pale de rotor ajustable autour de son axe longitudinal, une alimentation électrique et une unité de commande qui possède un mode de fonctionnement pour une marche au ralenti, le procédé étant **caractérisé par** les étapes suivantes :
- l'unité de commande commute dans deux cas d'utilisation dans le mode de fonctionnement de marche au ralenti, à savoir quand
(i) la vitesse du vent dépasse une vitesse de décrochage et l'alimentation électrique est effectuée par le biais d'un réseau électrique raccordé à l'éolienne ou quand
(ii) la vitesse du vent dépasse une vitesse de démarrage et le réseau électrique raccordé à l'éolienne ou le raccordement à celui-ci est tombé en panne,
- l'unité de contrôle détermine à partir de valeurs mesurées (v) concernant la vitesse du vent et la direction du vent une position angulaire azimutale (α) pour la salle des machines et un ou plusieurs angles de calage (ϕ) pour la au moins une pale de rotor de sorte que le rotor dans la position ajustée tourne avec une vitesse de rotation dans une plage de vitesses de rotation prédéterminée,
- au moins un entraînement azimutal alimenté par l'alimentation électrique met la salle des machines dans la position angulaire azimutale (α) déterminée par l'unité de commande et au moins un entraînement de calage alimenté par l'alimentation électrique met la au moins une pale de rotor dans la position angulaire (ϕ) déterminée par l'unité de commande, une génératrice auxiliaire couplée au rotor alimentant en courant au moins une partie des consommateurs électriques dans l'éolienne quand le réseau électrique raccordé à l'éolienne est tombé en panne.

2. Procédé selon la revendication 1, **caractérisé en ce que** l'unité de commande détermine pour la au moins une pale de rotor la ou les valeur(s) de consigne pour les angles de calage en fonction d'au moins l'angle azimutal calculé et/ou la valeur réelle de la vitesse de rotation.

3. Procédé selon la revendication 1 ou 2, **caractérisé en ce que** la plage de vitesses de rotation prédéterminée possède des vitesses de rotation faibles comparativement à un fonctionnement normal de l'éolienne.

4. Procédé selon l'une des revendications 1 ou 2, **caractérisé en ce que** la plage de vitesses de rotation prédéterminée présente des vitesses de rotation telles qu'elles se produisent en fonctionnement normal de l'éolienne.

5. Procédé selon l'une des revendications 1 à 4, **caractérisé en ce qu'**une génératrice destinée au fonctionnement normal est prévue comme génératrice auxiliaire.

6. Procédé selon l'une des revendications 1 à 5, **caractérisé en ce que** la génératrice auxiliaire est conçue pour l'alimentation d'au moins une partie des consommateurs électriques dans l'éolienne, ces consommateurs comprenant au moins l'unité de commande, le capteur de vent, l'entraînement azimutal et de calage.

7. Procédé selon l'une des revendications 1 à 6, **caractérisé en ce que** l'unité de commande détermine pour la au moins une pale de rotor la ou les valeur(s) de consigne pour les angles de calage en fonction d'une puissance requise des consommateurs électriques à alimenter dans l'éolienne.

8. Procédé selon l'une des revendications 1 à 7, **caractérisé en ce qu'**une rotation durable du rotor est effectuée dans le mode de fonctionnement de marche au ralenti.
